# EUROPEAN PATENT SPECIFICATION

(11) **EP 1 585 323 B1**
(45) Date of publication and mention of the grant of the patent: **18.10.2006**
(21) Application number: 05102520.3
(22) Date of filing: 30.03.2005
(51) Int. Cl.: H04N 5/63, H04N 5/44

(54) **Television receiver and method of controlling display thereof**
Fernsehempfänger und Verfahren zur Steuerung dessen Bildschirm
Recepteur de television et procédé de controle de son écran

(30) Priority: 31.03.2004 JP 2004108086
(43) Date of publication of application: 12.10.2005
(73) Proprietor: KABUSHIKI KAISHA TOSHIBA, Tokyo 105-8001 (JP)
(72) Inventor: Kamise, Shigero c/o Toshiba Corporation, Minato-ku Tokyo 105-8001 (JP); Ishibashi, Akihiko c/o Toshiba Corporation, Minato-ku Tokyo (JP)
(74) Representative: Henkel, Feiler & Hänzel

(56) References cited:
- EP-A- 0 593 272
- HALLER H O: "DER GRUENE FERNSEHER: SCHALTUNGS- UND MATERIAL-KONZEPTE TEIL 1: DRASTISCHE MATERIAL- UND ENERGIE-EINSPARUNGEN ERZIELBAR" ELEKTRONIK, WEKA FACHZEITSCR.-VERLAG, MUNCHEN, DE, vol. 47, no. 22, 27 October 1998 (1998-10-27), pages 140-147, XP000862485 ISSN: 0013-5658

## Description

### BACKGROUND OF THE INVENTION

### 1. Field of the Invention

The present invention relates to television receivers each having a liquid crystal display and a method of controlling the display thereof, more particularly, to a television receiver including a liquid crystal display, the television receiver capable of functionally turning on or off an operating power supply to the liquid crystal display, and a method of controlling the display thereof.

### 2. Description of the Related Art

General displays using liquid crystal as optical switching elements are liquid crystal display (LCD) panels. The LCD panel includes: a panel-shaped display section including liquid crystal elements and a three primary color optical filter; a control circuit for supplying video data to the liquid crystal elements of the display section; a backlight emitting light to the rear of a set of the liquid crystal elements; and an inverter circuit for supplying a power supply voltage to the backlight. These components are incorporated in a flat frame, thus forming the LCD panel.

The LCD panel is used as a display of a personal computer and is also used as a display of a television receiver.

Regarding applications for television receivers, large LCD panels of 40 inches or more appear. Advantageously, the LCD panels are light in weight and save space. In the future, therefore, in addition to plasma displays, the LCD panels will be used as displays of television receivers in many cases.

In the case of using the LCD panel as a display of a television receiver, to display video without uncomfortable feelings, it is necessary to manage operation timings of respective circuit components with care.

Particularly, the operation timing of the control circuit needs to be managed with great care. The reason is as follows: When the power supply of the LCD panel is once turned off, the power has to be again turned on after a predetermined time under restriction by liquid crystal characteristics. Unless the control circuit is operatively associated with the backlight at power-on, unfortunately, the backlight is lit up before the liquid crystal elements are driven by video signals, resulting in an unnatural display screen with no video.

Therefore, the television receiver including the LCD panel is constructed so that after the power is turned on, the backlight is lit up at the conclusion of a predetermined elapsed time to display video.

General television receivers each have a remote controller as standard equipment. A user switches between channels of the receiver and adjusts various settings such as volume control mainly using the remote controller. The user can also turn on or off the receiver using the remote controller.

In a case where the user accidentally operates a power supply key on the remote controller to turn off the receiver while the user is viewing a program, even if the user again turns on the power immediately, it takes some time before video is again displayed on the LCD panel. This irritates the user. Disadvantageously, usability is not very good.

Television receivers each including a cathode ray tube as a display also have a challenge concerned with the activation characteristics of the cathode ray tube. Attempts to improve the activation characteristics are performed.

For example, Japanese Unexamined Patent Application Publication No. 5-161093 discloses the following technique: When a power supply key on a remote controller is operated in a program viewing mode to turn off a television receiver, the receiver enters an apparent power-off state, in which the receiver is operated but a cathode ray tube is turned off and audio is muted, for a predetermined time period after the power-off. When the power supply key is operated within the predetermined time period, the OFF state of the cathode ray tube is canceled and the audio mute mode is canceled to immediately restart the program viewing mode. If the power supply key is not operated for the predetermined time period or longer, a normal power-off process is performed.

The technique disclosed in Japanese Unexamined Patent Application Publication No. 5-161093 can be applied to television receivers each including an LCD panel. However, a state set by operating the power supply key, i.e., the state in which the power is not turned off but video and audio are muted is managed on the basis of time. Therefore, it is not necessarily appropriate to apply the technique to LCD panels because the operations of circuit components require careful management.

A further technique is described by the article "Der grüne Fernseher ; Schaltungs- und Material-Konzepte Teil 1; Drastische Material- und Energie-Einsparungen erzielbar", Haller H. O., Elektronik, WEKA Fachzeitscr.-Verlag München, DE, vol. 47, no. 22, 27 Oct. 1998, pages 140-147. Said technique provides for a television receiver with economical Operation - The described device has two stand-by states ; the first one in which all the circuits are power supplied except the display section and the sound section, the second one in which only the remote control receiver is power supplied.

As mentioned above, in the conventional television receivers each including the LCD panel, if the user accidentally turns off the receiver, it takes considerable time to start video display after the user again turns on the receiver. The conventional television receivers each including the LCD panel need to be improved in usability.

### BRIEF SUMMARY OF THE INVENTION

Accordingly, it is an object of the present invention to provide a television receiver including an LCD panel with high usability in which a voltage supplied as an operating power supply to the LCD panel is monitored so that when the receiver is turned on before the voltage is reduced to a predetermined value or lower after turn-off, video and audio outputs can be immediately started, and a method of controlling the display thereof.

The television receiver according to the present invention has a receiving section which receives a broadcast program to obtain video signals; a display section, including a liquid crystal display panel, which displays the video signals; an operating power supply which selectively supplies power supply voltages to the receiving section and the display section, respectively; and a command generating section which generates a command to the operating power supply to turn off power supply and also turn on power supply, characterized in that it comprises: a monitoring section which monitors the internal state of the display section to generate a monitoring result; and a control section which interrupts the supply of the power supply voltages from the operating power supply to the display section when the command generating section generates the command to turn off power supply, again starts the supply of the power supply voltages to the display section when the command generating section generates the command to turn on power supply of the operating power supply while the monitoring section monitors the internal state of the display section after interrupting the operating power supply and the internal state satisfies a predetermined condition, and controls the operating power supply to turn off also the power supply voltages to the receiving section if the internal state of the display section does not satisfy the predetermined condition.

It is preferred that the control section interrupts the supply of the power supply voltages to the display section from the operating power supply after muting the video signals received by the receiving section when the command generating section generates the command to turn off power supply, and again starts the supply of the power supply voltages to the display section after canceling the video mute when the command generating section generates the command to turn off power supply of the operating power supply.

It is preferred that the liquid crystal display panel includes a liquid crystal display panel body, an inverter circuit, a backlight which emits light for displaying on the liquid crystal display panel body using an output of the inverter circuit as a power supply, and a control circuit which drives the liquid crystal display panel body on the basis of the video signals from the receiving section and controls the operation of the backlight; the operation power supply selectively supplies power supply voltages to the receiving section and the liquid crystal display panel, respectively; and the control section controls the operating power supply to interrupt the supply of the power supply voltages to the liquid crystal display panel when the command generating section generates the command to turn off power supply, again starts the supply of the power supply voltages to the liquid crystal display panel when a value of the voltage supplied to the inverter circuit as a power supply voltage is monitored by the monitoring section and the command generating section generates the command to turn on power supply of the operating power supply before the value becomes equal to or lower than a predetermined value, and turns off also the supply of the power supply voltage to the receiving section if the value of the power supply voltage to the inverter circuit becomes lower than the predetermined value.

It is preferred that the control section mutes the video signals received by the receiving section when the command generating section generates the command to turn off power supply, turns off the backlight, and interrupts the supply of the power supply voltages to the liquid crystal display panel, and cancels the video mute when the command generating section generates the command to turn on power supply of the operating power supply, turns on the backlight, and again starts the supply of the power supply voltages to the liquid crystal display panel.

Furthermore, the method of controlling the display of a television receiver according to the present invention has step of turning on power supply of a receiver; and step of receiving a broadcast program by a receiving section to display it on a display section, characterized in that it comprises: first determining step to determine whether a power supply key is operated; step of interrupting the supply of a power supply voltage from an operating power supply to the display section when the command to turn off power supply is generated by the operation of the power supply key at the first determining step; second determining step to monitor the internal state of the display section and determine whether the internal state satisfies a predetermined condition; third determining step to determine whether the power supply key is operated while the predetermined condition is satisfied; step to again start the supply of the power supply voltage to the display section when the command to turn on power supply is generated by the operation of the power supply key at the third step; and step to control the operating power supply to turn off also the supply of the power supply voltage to the receiving section if the predetermined condition is not satisfied at the second step.

In the method of controlling the display as mentioned above, it is preferred that the supply of the power supply voltage to the display section from the operating power supply is interrupted after muting the video signals received by the receiving section when the first command to turn off power supply is generated by the operation of the power supply key at the first determining step; and the supply of the power supply voltage to the display section is again started after canceling the video mute when the command to turn on power supply is generated by the operation of the power supply key at the third determining step.

According to the present invention, a television receiver including a liquid crystal display is constructed such that after a command to turn off power is generated, the television receiver can be switched between an apparent power-off state in which video and audio outputs can be immediately output and a true power-off state depending on the operating state of the liquid crystal display. Thus, the more useful television receiver can be provided.

### BRIEF DESCRIPTION OF THE DRAWINGS

Fig. 1 is a circuit block diagram of a television receiver according to an embodiment of the present invention;
Fig. 2 is a plan view of the arrangement of keys on a remote controller used in the television receiver of Fig. 1;
Fig. 3 is a circuit block diagram of essential components of the television receiver of Fig. 1;
Figs. 4A and 4B are timing charts explaining the operation of the television receiver of Fig. 1, Fig. 4B showing a control signal to turn on or off a liquid crystal display panel, the signal being transmitted from a back end processing (BEP) microcomputer to a power supply section, Fig. 4A showing a change in voltage of power 3 output from the power supply section based on the control signal;
Figs. 5A to 5D are timing charts explaining the operation of the television receiver of Fig. 1, Fig. 5D showing a control signal transmitted from the BEP microcomputer to the power supply section, Fig. 5A showing a change in voltage of power 4 output from the power supply section based on the control signal shown in Fig. 5D, Fig. 5B showing a change of the power 3 output from the power supply section based on the control signal in Fig. 5D, Fig. 5C showing timing at which a backlight is turned on and off; and
Fig. 6 is a flowchart of the operation of the television receiver of Fig. 1.

### DETAILED DESCRIPTION OF THE INVENTION

A television receiver according to an embodiment of the present invention will now be described in detail with reference to the drawings.

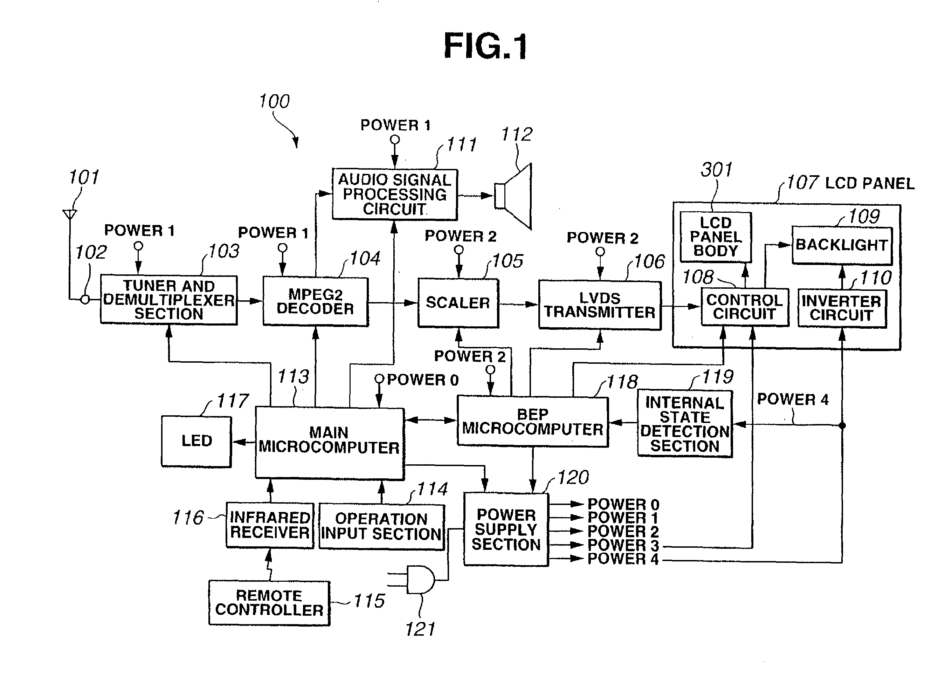

Fig. 1 is a block diagram of the circuit configuration of the television receiver according to the embodiment of the present invention.

Referring to Fig. 1, a television receiver 100 is compatible with digital broadcasting. The television receiver 100 has an antenna input terminal 102 connected through a cable to an antenna 101 for receiving digital satellite broadcasting signals and digital terrestrial broadcasting signals.

The antenna input terminal 102 is connected to a tuner and demultiplexer section 103 serving as a receiving section. Airwaves as broadcasting signals received by the antenna 101 are supplied to the tuner and demultiplexer section 103. In the tuner and demultiplexer section 103, the broadcasting signals are subjected to channel selection, demodulation, and error correction and are then converted into a transport stream (TS) of MPEG2 (Moving Picture Experts Group 2). Further, packetized elementary streams (PES) constituting a program are extracted from the TS and are supplied to an MPEG2 decoder 104.

The MPEG2 decoder 104 decodes an MPEG2 video PES into uncompressed digital video signals, which are supplied to a scaler 105. The scaler 105 corrects the gray scale of the digital video signal supplied from the MPEG2 decoder 104 in accordance with the display characteristics of an LCD panel 107 and then supplies the resultant signal to a low voltage differential signaling (LVDS) transmitter 106.

The LVDS transmitter 106 receives the video signal, a sync signal, and a clock to produce a low voltage differential signal and supplies the signal to the LCD panel 107 serving as a display section. The LCD panel 107 includes a control circuit 108 and an inverter circuit 110 for applying a power supply voltage to a backlight 109. On the basis of the low voltage differential signal, the control circuit 108 drives an LCD irradiated with light emitted from the backlight 109, thus displaying video based on the video signal.

The MPEG2 decoder 104 performs a decoding process on an audio PES constituting the program to produce uncompressed digital audio signals and supplies the signals to an audio signal processing circuit 111. The audio signal processing circuit 111 processes each digital audio signal, e.g., performs volume control and conversion into an analog signal and then supplies the resultant signal to a speaker 112 to output audio.

The television receiver 100 further includes a main microcomputer 113 constituting a control section for channel switching and volume control including audio mute. The main microcomputer 113 is connected to an operation input section 114 and an infrared receiver 116 which receives a signal from a remote controller 115. Each of the operation input section 114 and the remote controller 115 functions as a command generating section for generating various commands including power-on/off commands.

The operation input section 114 includes a plurality of switches arranged on, for example, a front panel of the television receiver 100. A user operates the operation input section 114 or the remote controller 115 to send a command, which is received by the main microcomputer 113, thereby to control the tuner and demultiplexer section 103, the MPEG2 decoder 104, and the audio signal processing circuit 111 to perform channel selection, audio mute, or volume control.

The main microcomputer 113 is further connected to a light emitting diode (LED) 117 for indicating the ON or OFF state of the television receiver 100. When the television receiver 100 is turned on, the LED 117 emits green light. When the television receiver 100 is turned off, the LED 117 emits red light.

The television receiver 100 further includes a back end processing (BEP) microcomputer 118 for controlling the scaler 105, the LVDS transmitter 106, and the LCD panel 107. The BEP microcomputer 118 and the main microcomputer 113 constitute the control section. The BEP microcomputer 118 is connected to an internal state detection section 119 serving as a monitoring section which is an essential component according to the present invention. The internal state detection section 119 monitors a change in power supply voltage to the LCD panel 107. When the power supply voltage is equal to or lower than a predetermined voltage, the internal state detection section 119 transmits information indicating the fact to the BEP microcomputer 118, the BEP microcomputer 118 transmits the information to the main microcomputer 113, and the main microcomputer 113 turns off powers 1 - 4 of a power supply section 120, whereby to control so that the television receiver 100 is turned off. The above operation will be described in detail below.

The television receiver 100 further includes the power supply section 120 serving as an operating power supply which supplies a power supply voltage to each circuit component. The power supply section 120 is connected to a commercial AC power supply through a power plug 121. The power supply section 120 generates five kinds of DC power supply voltages (of powers 0 to 4).

In other words, the power supply section 120 outputs the powers 0 to 4. The power supply voltage of the power 0 is always applied as long as the power plug 121 is connected to the commercial AC power supply. The power 0 is used as a power supply voltage for the main microcomputer 113.

The power 1 is used for front-end circuit components, i.e., the tuner and demultiplexer section 103, the MPEG2 decoder 104, and the audio signal processing circuit 111.

The power 2 is used for back-end circuit components, i.e., the scaler 105, the LVDS transmitter 106 and the BEP microcomputer 118. The powers 3 and 4 are supplied to the LCD panel 107. The power 3 is supplied to the control circuit 108 in the LCD panel 107. The power 4 is supplied to the inverter circuit 110 in the LCD panel 107.

The main microcomputer 113 controls the ON and OFF states of the power 1. The BEP microcomputer 118 controls the ON and OFF states of each of the powers 2, 3 and 4 under the management by the main microcomputer 113.

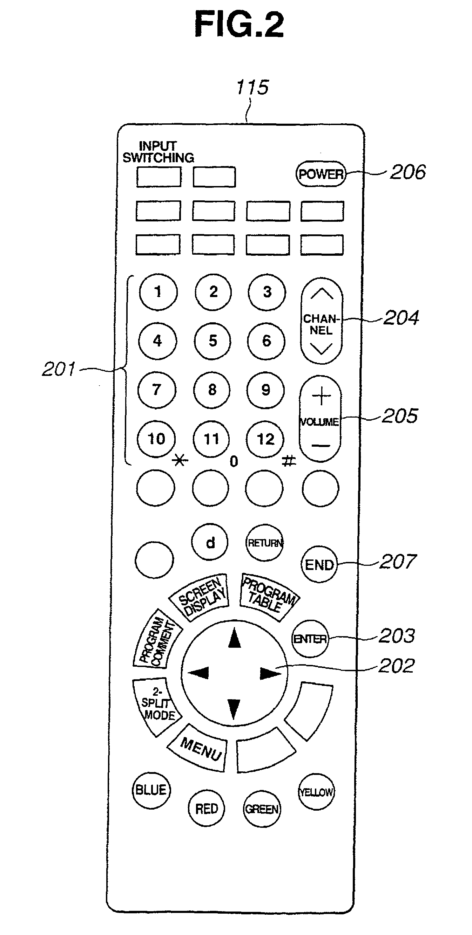

Fig. 2 shows an example of the arrangement of keys on the remote controller 115. Referring to Fig. 2, the remote controller 115 has a numeric keypad 201 including "1" to "12" keys used to switch between channels or input numeric data.

The remote controller 115 further includes a cursor key 202 to select an item on a screen, an enter key 203 to determine the item selected using the cursor key 202, a channel up/down key 204 to select a channel, a volume control key 205 to turn up or down volume, and a power supply key 206 to turn on or off the television receiver 100.

The typical operation of the television receiver 100 will now be described with reference to Fig. 1.

In the OFF state of the television receiver 100, the power supply section 120 generates only the supply voltage of the power 0. The LCD panel 107 does not display any video. The user operates the power supply key 206 on the remote controller 115 to view a broadcast program.

When receiving a remote control signal through the infrared receiver 116, the main microcomputer 113 controls the power supply section 120 to output the powers 1 to 4. In addition, on the basis of channel data stored in an internal memory of the main microcomputer 113, the channel data indicating a channel which was selected before the television receiver 100 was turned off, the main microcomputer 113 controls the tuner and demultiplexer section 103 to select the channel.

The main microcomputer 113 further controls the MPEG2 decoder 104, the BEP microcomputer 118, the scaler 105, the LVDS transmitter 106, the LCD panel 107, and the audio signal processing circuit 111 to display video of a broadcast program of the selected channel on the LCD panel 107 and generate audio of the program from the speaker 112.

To view a broadcast program of another channel, the user operates the numeric keypad 201 on the remote controller 115 to directly input a channel number. Alternatively, the user operates the channel up/down key 204 to switch between channels. To adjust the volume, the user operates the volume control key 205. To turn off the television receiver 100, the user operates the power supply key 206.

The operation of the television receiver 100 according to the present invention will now be described. When the power supply key 206 is operated while the user is viewing a program, i.e., during a program viewing mode, the main microcomputer 113 transmits a control signal to the BEP microcomputer 118 so that the BEP microcomputer 118 controls the LVDS transmitter 106 to allow the LCD panel 107 to display black, i.e., to mute video. Simultaneously, the main microcomputer 113 controls the audio signal processing circuit 111 to mute audio. In addition, the main microcomputer 113 controls the LED 117 to emit red light.

Further, the main microcomputer 113 transmits a control signal to the BEP microcomputer 118, thereby to control the control circuit 108 to turn off the backlight 109. Since the LED 117 emits red light, therefore, it appears that the television receiver 100 is turned off, i.e., the television receiver 100 enters an apparent OFF state.

Subsequently, the BEP microcomputer 118 turns off the powers 3 and 4 of the power supply section 120. The voltages of the powers 3 and 4 gradually decrease depending on the circuit configuration (for example, the capacitances of capacitors connected to respective output terminals for the powers 3 and 4) of the power supply section 120.

At that time, the power supply section 120 continuously outputs the powers 1 and 2. Each of the tuner and demultiplexer section 103, the MPEG2 decoder 104, the audio signal processing circuit 111, the BEP microcomputer 118, the scaler 105, and the LVDS transmitter 106 is in the operating state.

The internal state detection section 119, connected to the BEP microcomputer 118, detects the voltage of the power 4 to monitor the internal state of the LCD panel 107, i.e. the state of the inverter circuit 110, and transmits a detection output to the BEP microcomputer 118. The BEP microcomputer 118 does not transmit any signal to the main microcomputer 113 so that the power supply section 120 keeps supplying the powers 1 and 2 until the BEP microcomputer 118 determines on the basis of the detection output from the internal state detection section 119 that the voltage of the power 4 is reduced to, e.g., a threshold V1.

When the power supply key 206 on the remote controller 115 is operated before the voltage of the power 4 is equal to or lower than the threshold V1, the main microcomputer 113 allows the BEP microcomputer 118 to control the power supply section 120 to turn on the powers 3 and 4.

Consequently, in the LCD panel 107, the power 3 is supplied to the control circuit 108 and the power 4 is supplied to the inverter circuit 110. Simultaneously, the main microcomputer 113 controls the audio signal processing circuit 111 and allows the BEP microcomputer 118 to control the LVDS transmitter 106 to cancel the video and audio mute mode. Further, the main microcomputer 113 allows the BEP microcomputer 118 to turn on the backlight 109 of the LCD panel 107.

Thus, video of the program that the user has viewed so far is displayed on the LCD panel 107 and audio is output from the speaker 112. The user can again view the program immediately.

When the voltage of the power 4 is equal to or lower than the threshold V1, the internal state detection section 119 transmits a signal to the BEP microcomputer 118. In response to the signal, the BEP microcomputer 118 transmits a control signal to the main microcomputer 113. The main microcomputer 113 controls the power supply section 120 to turn off the powers 1 and 2. Thus, the television receiver 100 enters a state of having the powers 1 - 4 turned off, i.e. a power-off state, which is called a standby mode.

As mentioned above, according to the present invention, when the power supply key 206 on the remote controller 115 is operated in the program viewing mode, the television receiver 100 enters the video and audio mute mode, namely, the apparent power-off state (apparent standby mode). When the power supply key 206 is operated before the voltage supplied to the inverter circuit 110 of the LCD panel 107 is equal to or lower than the threshold V1, video and audio are immediately output. When the voltage supplied to the inverter circuit 110 of the LCD panel 107 is equal to or lower than the threshold V1, the television receiver 100 enters the true power-off state. Even when the user operates the power supply key 206 accidentally, therefore, the user can immediately bring the television receiver 100 into the original program viewing mode by again operating the power supply key 206. The usability of the television receiver 100 is not reduced.

According to the present invention, particularly, the state of the inverter circuit 110 of the LCD panel 107 is monitored. On the basis of a monitoring result, the setting of the state in which the video and the audio are muted and the backlight is turned off (the apparent turn-off state)and the true power-off state is managed. Consequently, the display operation of the television receiver 100 with the liquid crystal display can be properly controlled.

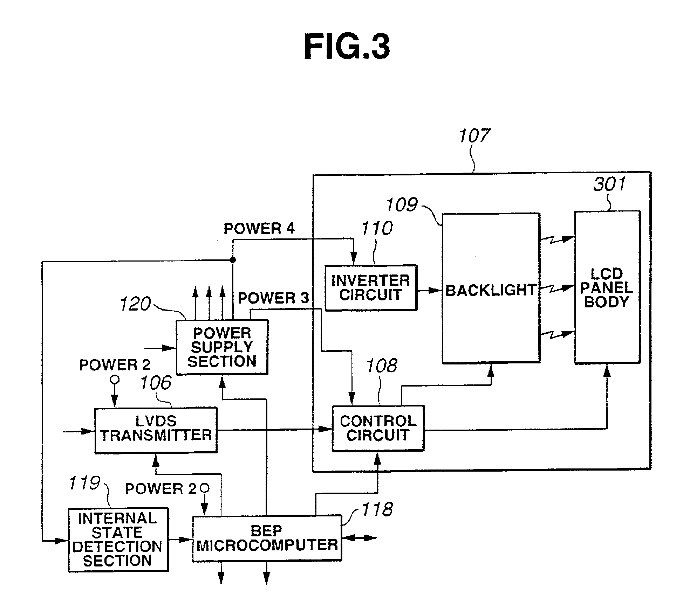

Voltage supply timing to the LCD panel 107 and the operations of the components in the LCD panel 107 will now be described in detail with reference to Figs. 3 to 5D.

Fig. 3 is a circuit block diagram of the essential components of an embodiment of the present invention. In Fig. 3, the same components as those in Fig. 1 are designated by the same reference numerals.

The LCD panel 107 has an LCD panel body 301 including liquid crystal elements and a three primary color filer, the backlight 109 emitting light to the LCD panel body 301, the inverter circuit 110 for supplying power supply voltage to the backlight 109, and the control circuit 108 for driving the LCD panel 107 and controlling the operation thereof.

In response to a signal from the LVDS transmitter 106, the control circuit 108 drives the LCD panel body 301 and also turns on or off the backlight 109 under the management of the BEP microcomputer 118.

The powers 3 and 4 are supplied from the power supply section 120 to the control circuit 108 and the inverter circuit 110, respectively, under the management of the BEP microcomputer 118. In response to a control signal from the main microcomputer 113 in Fig. 1, the BEP microcomputer 118 controls the power supply section 120 to turn on or off the powers 3 and 4 and also controls the LVDS transmitter 106 to mute video. In addition, the BEP microcomputer 118 controls the control circuit 108 to turn on or off the backlight 109.

The BEP microcomputer 118 is connected to the internal state detection section 119. The BEP microcomputer 118 receives a detection output of the internal state detection section 119. The internal state detection section 119 has a function of monitoring the voltage of the power 4. The internal state detection section 119 has a predetermined voltage, e.g., the threshold V1 therein. When the voltage of the power 4 is equal to or lower than the threshold V1, the internal state detection section 119 transmits information indicating the fact to the BEP microcomputer 118.

The BEP microcomputer 118 transmits the information to the main microcomputer 113. The main microcomputer 113 turns off the operating powers (excluding the power 0) of the television receiver 100 to switch the television receiver 100 into the standby mode.

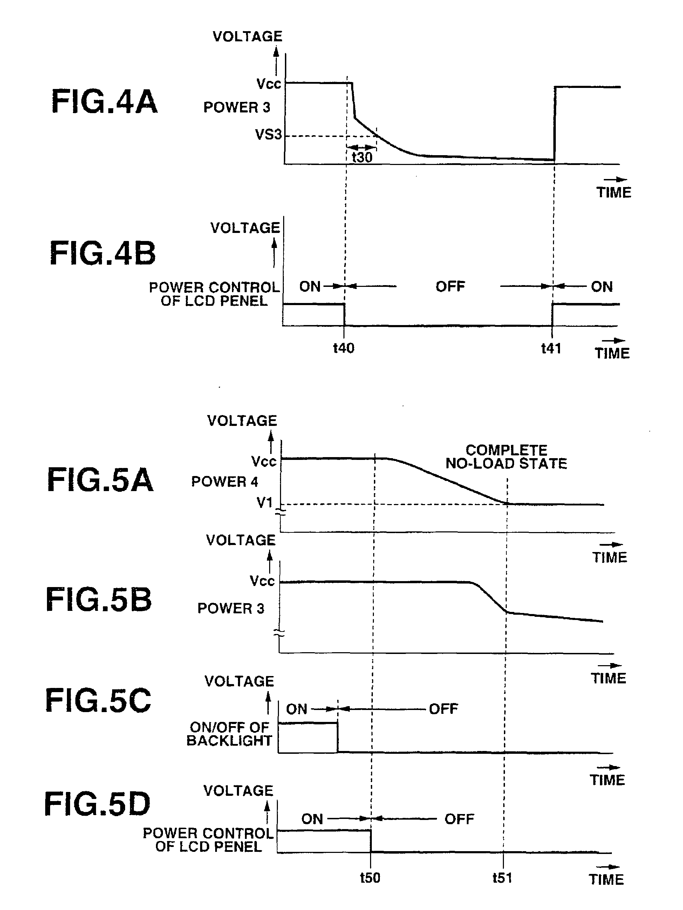

The operations of the circuit components in Fig. 3 will now be described with reference to Figs. 4A to 5D.

Fig. 4B shows a control signal to control the power supply section 120, the signal being transmitted from the BEP microcomputer 118 to the power supply section 120. Fig. 4A shows a change in the voltage of the power 3 output from the power supply section 120 depending on the control signal of Fig. 4B. Referring to Fig. 4B, at time t40, the power supply (the powers 3 and 4) of the LCD panel 107 is controlled to be turned off. At time t41, the power supply is controlled to be turned on.

Fig. 5D shows the control signal to control the power supply section 120, the signal being transmitted from the BEP microcomputer 118 to the power supply section 120. Fig. 5A shows a change in the voltage of the power 4 output from the power supply section 120 depending on the control signal of Fig. 5D. Fig. 5B shows a change in the voltage of the power 3 generated from the power supply section 120 depending on the control signal of Fig. 5D. Fig. 5C shows timing at which the ON state of the backlight 109 is switched into the OFF state. The time axes in Figs. 5A - 5D are the ones having parts of the time axes in Fig. 4A and Fig. 4B enlarged and shown. Fig. 5A shows the state of change in the voltage of the power 4, and Fig. 5B shows the state of change in the voltage of the power 3. Referring to Fig. 5D, at time t50, the power supply (the powers 3 and 4) of the LCD panel 107 is turned off. Time t51 shows a turn-on boundary timing necessary for restoring the power supply by the re-operation of the power supply key. The backlight 109 is first controlled to be turned off based on the command to turn off the power supply by the operation input section 114 or the remote controller 115 (see Fig. 5C), and subsequently, the power supply (the powers 3 and 4) of the LCD panel 107 is controlled to be turned off.

When the power supply key 206 on the remote controller 115 is operated in the program viewing mode, the main microcomputer 113 receives a signal indicating the operation and transmits a command to the BEP microcomputer 118 in order to turn off the LVDS transmitter 106 and the backlight 109 of the LCD panel 107, and further turn off the power supply (the powers 3 and 4) of the LCD panel 107.

In response to the command, the BEP microcomputer 118 controls the LVDS transmitter 106 to mute video and transmits a control signal to the control circuit 108 to turn off the backlight 109. Thus, the backlight 109 turns off. Fig. 5C shows the turn-off timing.

Further, the BEP microcomputer 118 transmits a control signal to the power supply section 120 to turn off the power supply (the powers 3 and 4) of the LCD panel 107. The timing thereof is as shown in Fig. 5D. In other words, the falling edge of the control signal leads to turning off the powers 3 and 4 through the power supply section 120. Thus, the voltages of the powers 3 and 4 start to fall. As shown in Fig. 4A, if the voltage of the power 3 is equal to or lower than a value VS3 that is 0.3 times a specified value Vcc (e.g., VS3 represents 1.5 V when the specified voltage Vcc is 5 V), it is necessary to provide a time interval of one second at minimum until the voltage of the power 3 is equal to or higher than a value that is 0.9 times the specified value Vcc after the next command to turn on the power supply is generated. In other words, after the power supply (power 3) is turned off once, the power supply cannot be turned on for a minimum of one second.

Therefore, in order to immediately turn on the power supply (power 3), it is necessary to transmit a command to turn on the power supply before the voltage is equal to or lower than the value VS3 (0.3Vcc).

Regarding a period elapsed after the command to turn off the power supply (power 3) until the voltage of the power 3 is equal to or lower than 0.3Vcc, an observed value is about 0.3 seconds as shown by reference symbol t30 in Fig. 4A. When the resistance of a specific circuit component is changed, a period elapsed until the voltage is equal to or lower than 0.3Vcc can be extended. Therefore, power control can be set so that the user can again operate the power supply key 206 on the remote controller 115 with sufficient time to return the television receiver 100 into the original program viewing mode.

Referring to Fig. 5A, the voltage of the power 4, i.e. the input voltage of the inverter circuit 110 relatively rapidly drops due to a connected load until an output voltage (not shown) of the inverter circuit 110 is reduced to 0 V after the backlight 109 is turned off (refer to Fig. 5C) and a power control signal is turned off (refer to Fig. 5D). After the output voltage of the inverter circuit 110 reaches 0 V, the power 4 enters a complete no-load state. The voltage of the power 4 remarkably gradually drops. It takes ten or more seconds until the voltage of the power 4 reaches 0 V. Accordingly, the voltage of the power 4 is held at about 4.7 V for one second after the output voltage of the inverter circuit 110 reaches 0 V.

The ratio between the powers 3 and 4 is substantially 1:1. Accordingly, observing the voltage of the power 4 is equivalent to observing the power 3.

On the assumption that the threshold V1 of the power 4 is 4.7 V, when the voltage of the power 4 is equal to or lower than the threshold V1, the internal state detection section 119 transmits information indicating the fact to the BEP microcomputer 118. The BEP microcomputer 118 transmits a signal indicating the information to the main microcomputer 113.

In the case where the signal indicating that the voltage of the power 4 is equal to or lower than the threshold V1 is transmitted from the BEP microcomputer 118 to the main microcomputer 113, if the power supply key 206 on the remote controller 115 is not operated again, the main microcomputer 113 determines that the preceding command to turn off the power is normal and again transmits the power-off command to the power supply section 120, thus turning off the powers 1 and 2.

Consequently, the power supply (power 2) of the BEP microcomputer 118 is turned off. Since the LCD panel 107 is just being turned off, the television receiver 100 substantially enters the standby mode after a while.

On the other hand, if the power supply key 206 on the remote controller 115 is operated again before the signal indicating that the voltage of the power 4 is equal to or lower than 4.7 V is transmitted from the BEP microcomputer 118 to the main microcomputer 113, the main microcomputer 113 determines that the preceding power-off command is cancelled depending on the user's convenience and transmits a command to the BEP microcomputer 118 in order to cancel the video mute of the LVDS transmitter 106, control the audio signal processing circuit 111 to cancel the audio mute, turn on the backlight 109 of the LCD panel 107, and return the power supply (powers 3 and 4) of the LCD panel 107. In addition, the LED 117 is rendered in a state of emitting green light.

Thus, video is again displayed on the LCD panel 107 and audio is output from the speaker 112.

As mentioned above, the television receiver 100 in the apparent power-off state, i.e., in the video and audio mute mode can be rapidly returned to the power-on state by successively operating the power supply key 206. It seems to the user that the television receiver 100 is instantaneously switched from the power-off state to the power-on state. Thus, the user is not impatient with the switching.

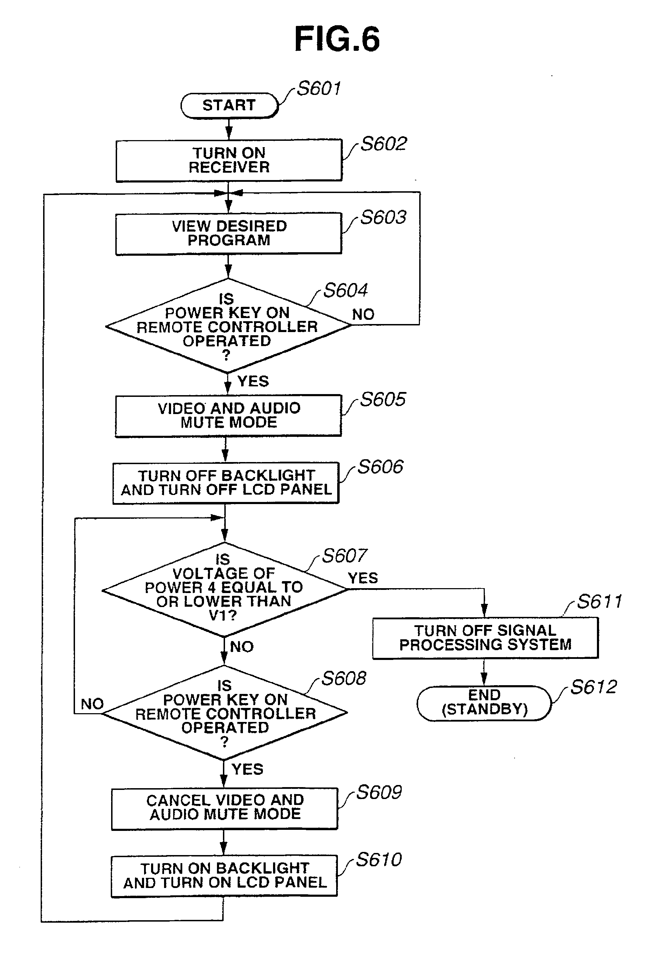

Fig. 6 is a flowchart to once more explain the operation of controlling the display of a television receiver according to the present invention as mentioned above. In Fig. 6, the operation starts in step S601. In step S602, the receiver is turned on. In step S603, a desired program is viewed.

In step S604, whether the power supply key 206 on the remote controller 115 is operated is determined. If it is determined that the power supply key 206 is not operated, the operation returns to step 603. When it is determined in step S604 that the power supply key 206 is operated, in step S605, the LVDS transmitter 106 and the audio signal processing circuit 111 are controlled so that the receiver enters the audio and video mute mode. In step S606, the backlight 109 is turned off and the LCD panel 107 is turned off.

In step S607, whether the voltage of the power 4 is equal to or lower than the threshold V1 is determined. When the voltage is not equal to or lower than the threshold V1, it is determined in step S608 whether the power supply key 206 on the remote controller 115 is operated again. When it is determined that the power supply key 206 is not operated, the operation returns to step S607.

When it is determined in step S608 that the power supply key 206 is operated again, in step S609, the LVDS transmitter 106 and the audio signal control circuit 111 are controlled to cancel the video and audio mute.

Then, in step S610, the backlight 109 is turned on and the power supply of the LCD panel 107 is turned on, thereby to have the operation return to step S603.

When it is determined in step S607 that the voltage of the power 4 is equal to or lower than the threshold V1, in step S611, the powers 1 and 2 for a signal processing system including the signal processing circuits are turned off in the power supply section 120, so that the television receiver 100 substantially enters the standby mode (step S612).

As mentioned above, according to the present invention, the television receiver 100 operates as follows: When the power supply key 206 on the remote controller 115 is operated in the program viewing mode, the television receiver 100 enters the video and audio mute mode. It appears that the television receiver 100 enters the power-off state (standby mode), i.e., the television receiver 100 enters the apparent power-off state. When the power supply key 206 is operated again before the voltage supplied to the LCD panel 107 is equal to or lower than the threshold V1, video and audio are immediately output. When the voltage supplied to the LCD panel 107 is equal to or lower than the threshold V1, the television receiver 100 enters the true power-off state. If the user operates the power supply key 206 by accident, the user successively operates the power supply key 206 to immediately return the television receiver 100 to the program viewing mode. Accordingly, the usability is not reduced.

According to the present invention, particularly, the internal state of the LCD panel 107 is monitored to manage the setting of the apparent power-off state, in which the video and audio mute mode is set and the backlight is turned off, and that of the true power-off state. Thus, the display operation of the television receiver 100 with the liquid crystal display can be properly controlled.

Having described the preferred embodiments of the invention referring to the accompanying drawings, it should be understood that the present invention is not limited to those precise embodiments and various changes and modifications thereof could be made by one skilled in the art without departing from the scope of the appended claims.

## Claims

1. A television receiver having :
a receiving section for receiving a broadcast program to obtain video signals;
a display section, including a liquid crystal display panel, for displaying the video signals;
an operating power supply for selectively supplying power supply voltages to the receiving section and the display section, respectively; and
a command generating section for generating a command to the operating power supply to turn off power supply and also turn on power supply,
**characterized in that** it comprises:
a monitoring section for monitoring the internal state of the display section to generate a monitoring result; and
a control section for interrupting the supply of the power supply voltages from the operating power supply to the display section when the command generating section generates the command to turn off power supply, again starting the supply of the power supply voltages to the display section when the command generating section generates the command to turn on power supply of the operating power supply while the monitoring section monitors the internal state of the display section after interrupting the operating power supply and the internal state satisfies a predetermined condition, and controlling the operating power supply to turn off also the power supply voltages to the receiving section if the internal state of the display section does not satisfy the predetermined condition.

2. The television receiver according to Claim 1, wherein the control section interrupts the supply of the power supply voltages to the display section from the operating power supply after muting the video signals received by the receiving section when the command generating section generates the command to turn off power supply, and again starts the supply of the power supply voltages to the display section after canceling the video mute when the command generating section generates the command to turn off power supply of the operating power supply.

3. The television receiver according to Claim 1, wherein the display section includes an inverter circuit and a backlight to emit light using an output of the inverter circuit as a power supply, and
the predetermined condition of the internal state of the display section is set based on a power supply voltage supplied to the inverter circuit.

4. The television receiver according to Claim 2, wherein the display section includes an inverter circuit and a backlight to emit light using an output of the inverter circuit as a power supply, and
the predetermined condition of the internal state of the display section is set based on a power supply voltage supplied to the inverter circuit.

5. The television receiver according to Claim 1, wherein the liquid crystal display panel includes a liquid crystal display panel body, an inverter circuit, a backlight which emits light for displaying on the liquid crystal display panel body using an output of the inverter circuit as a power supply, and a control circuit which drives the liquid crystal display panel body on the basis of the video signals from the receiving section and controls the operation of the backlight;
the operation power supply selectively supplies power supply voltages to the receiving section and the liquid crystal display panel, respectively; and
the control section controls the operating power supply to interrupt the supply of the power supply voltages to the liquid crystal display panel when the command generating section generates the command to turn off power supply, again starts the supply of the power supply voltages to the liquid crystal display panel when a value of the voltage supplied to the inverter circuit as a power supply voltage is monitored by the monitoring section and the command generating section generates the command to turn on power supply of the operating power supply before the value becomes equal to or lower than a predetermined value, and turns off also the supply of the power supply voltage to the receiving section if the value of the power supply voltage to the inverter circuit becomes lower than the predetermined value.

6. The television receiver according to Claim 5, wherein the control section mutes the video signals received by the receiving section when the command generating section generates the command to turn off power supply, turns off the backlight, and interrupts the supply of the power supply voltages to the liquid crystal display panel, and cancels the video mute when the command generating section generates the command to turn on power supply of the operating power supply, turns on the backlight, and again starts the supply of the power supply voltages to the liquid crystal display panel.

7. The television receiver according to Claim 6, wherein the receiving section also outputs audio of the received broadcast program, and
the control section controls muting the audio signal and canceling the muting in association with the video signals.

8. A method of controlling the display of a television receiver having:
step of turning on power supply of a receiver; and
step of receiving a broadcast program by a receiving section to display it on a display section;
**characterized in that** it comprises:
first determining step to determine whether a power supply key is operated;
step of interrupting the supply of a power supply voltage from an operating power supply to the display section when the command to turn off power supply is generated by the operation of the power supply key at the first determining step;
second determining step to monitor the internal state of the display section and determine whether the internal state satisfies a predetermined condition;
third determining step to determine whether the power supply key is operated while the predetermined condition is satisfied;
step to again start the supply of the power supply voltage to the display section when the command to turn on power supply is generated by the operation of the power supply key at the third determining step; and
step to control the operating power supply to turn off also the supply of the power supply voltage to the receiving section if the predetermined condition is not satisfied at the second determining step.

9. The method of controlling the display of a television receiver according to Claim 8,
wherein the supply of the power supply voltage to the display section from the operating power supply is interrupted after muting the video signals received by the receiving section when the first command to turn off power supply is generated by the operation of the power supply key at the first determining step; and
the supply of the power supply voltage to the display section is again started after canceling the video mute when the command to turn on power supply is generated by the operation of the power supply key at the third determining step.

10. The method of controlling the display of a television receiver according to Claim 8,
wherein the predetermined condition in the display section is set based on the power supply voltage supplied to the display section.

11. The method of controlling the display of a television receiver according to Claim 9,
wherein the predetermined condition in the display section is set based on the power supply voltage supplied to the display section.

## Patentansprüche

1. Fernsehempfänger, mit:
einem Empfangsabschnitt zum Empfangen eines Rundfunkprogramms, um Videosignale zu erhalten;
einem Anzeigeabschnitt, der ein Flüssigkristall-Anzeigefeld zum Anzeigen der Videosignale aufweist;
einer Betriebsleistungsversorgung zum selektiven Liefern von Leistungsversorgungsspannungen an den Empfangsabschnitt bzw. dem Anzeigeabschnitt; und
einem Befehlserzeugungsabschnitt zum Erzeugen eines Befehls an die Betriebsleistungsversorgung, um die Leistungsversorgung abzuschalten und auch die Leistungsversorgung anzuschalten,
**dadurch gekennzeichnet, dass** er umfasst:
einen Überwachungsabschnitt zum Überwachen des internen Zustands des Anzeigeabschnitts, um ein Überwachungsergebnis zu erzeugen; und
einen Steuerabschnitt zum Unterbrechen der Versorgung der Leistungsversorgungsspannungen von der Betriebsleistungsversorgung zu dem Anzeigeabschnitt, wenn der Befehlserzeugungsabschnitt den Befehl erzeugt, die Leistungsversorgung abzuschalten, zum erneuten Starten der Versorgung der Leistungsversorgungsspannungen zu dem Anzeigeabschnitt, wenn der Befehlserzeugungsabschnitt den Befehl erzeugt, die Leistungsversorgung der Betriebsleistungsversorgung anzuschalten, während der Überwachungsabschnitt den internen Zustand des Anzeigeabschnitts nach Unterbrechen der Betriebsleistungsversorgung überwacht und der interne Zustand eine vorbestimmte Bedingung erfüllt, und zum Steuern der Betriebsleistungsversorgung, um die Leistungsversorgungsspannungen zu dem Empfangsabschnitt ebenfalls abzuschalten, wenn der interne Zustand des Anzeigeabschnitts die vorbestimmte Bedingung nicht erfüllt.

2. Fernsehempfänger gemäß Anspruch 1, bei dem der Steuerabschnitt die Versorgung der Leistungsversorgungsspannungen zu dem Anzeigeabschnitt von der Betriebsleistungsversorgung unterbricht, nach Stummschaltung der durch den Empfangsabschnitt empfangenen Videosignale, wenn der Befehlserzeugungsabschnitt den Befehl erzeugt, die Leistungsversorgung abzuschalten, und die Versorgung der Leistungsversorgungsspannungen zu dem Anzeigeabschnitt erneut startet, nach Löschen der Videostummschaltung, wenn der Befehlserzeugungsabschnitt den Befehl erzeugt, die Leistungsversorgung der Betriebsleistungsversorgung abzuschalten.

3. Fernsehempfänger gemäß Anspruch 1, bei dem der Anzeigeabschnitt eine Inverterschaltung und eine Hintergrundbeleuchtung umfasst, um Licht mit einer Ausgabe der Inverterschaltung als eine Leistungsversorgungsversorgung zu emittieren, und
die vorbestimmte Bedingung des internen Zustands des Anzeigeabschnitts basierend auf einer an die Inverterschaltung gelieferten Leistungsversorgungsspannung eingestellt wird.

4. Fernsehempfänger gemäß Anspruch 2, bei dem der Anzeigeabschnitt eine Inverterschaltung und eine Hintergrundbeleuchtung aufweist, um Licht mit einer Ausgabe der Inverterschaltung als eine Leistungsversorgung zu emittieren, und
die vorbestimmte Bedingung des internen Zustands des Anzeigeabschnitts basierend auf einer an die Inverterschaltung gelieferte Leistungsversorgungsspannung eingestellt wird.

5. Fernsehempfänger gemäß Anspruch 1, bei dem das Flüssigkristall-Anzeigefeld umfasst: einen Flüssigkristall-Anzeigefeldkörper, eine Inverterschaltung, eine Hintergrundbeleuchtung, das Licht zum Anzeigen auf dem Flüssigkristall-Anzeigefeldkörper mit einer Ausgabe der Inverterschaltung als eine Leistungsversorgung emittiert, und eine Steuerschaltung, die den Flüssigkristall-Anzeigefeldkörper auf der Grundlage der Videosignale von dem Empfangsabschnitt ansteuert und den Betrieb der Hintergrundbeleuchtung steuert;
wobei die Betriebsleistungsversorgung selektiv Leistungsversorgungsspannungen zu dem Empfangsabschnitt bzw. dem Flüssigkristall-Anzeigefeld liefert; und
der Steuerabschnitt die Betriebsleistungsversorgung steuert, um die Versorgung der Leistungsversorgungsspannungen zu dem Flüssigkristall-Anzeigefeld zu unterbrechen, wenn der Befehlserzeugungsabschnitt den Befehl erzeugt, die Leistungsversorgung abzuschalten, die Versorgung der Leistungsversorgungsspannungen zu dem Flüssigkristall-Anzeigefeld erneut startet, wenn ein Wert der zu der Inverterschaltung als eine Leistungsversorgungsspannung gelieferten Spannung durch den Überwachungsabschnitt überwacht wird, und der Befehlserzeugungsabschnitt den Befehl erzeugt, die Leistungsversorgung der Betriebsleistungsversorgung anzuschalten, bevor der Wert gleich oder niedriger als ein vorbestimmter Wert wird, und ebenfalls die Versorgung der Leistungsversorgungsspannung zu dem Empfangsabschnitt abschaltet, wenn der Wert der Leistungsversorgungsspannung zu der Inverterschaltung niedriger als der vorbestimmte Wert wird.

6. Fernsehempfänger gemäß Anspruch 5, bei dem der Steuerabschnitt die durch den Empfangsabschnitt empfangenen Videosignale stumm schaltet, wenn der Befehlserzeugungsabschnitt den Befehl erzeugt, die Leistungsversorgung abzuschalten, die Hintergrundbeleuchtung abschaltet und die Versorgung der Leistungsversorgungsspannungen zu dem Flüssigkristall-Anzeigefeld unterbricht, und die Videostummschaltung löscht, wenn der Befehlserzeugungsabschnitt den Befehl erzeugt, die Leistungsversorgung der Betriebsleistungsversorgung anzuschalten, die Hintergrundbeleuchtung anschaltet und die Versorgung der Leistungsversorgungsspannungen zu dem Flüssigkristall-Anzeigefeld erneut startet.

7. Fernsehempfänger gemäß Anspruch 6, bei dem der Empfangsabschnitt ebenfalls Audio der empfangenen Rundfunkprogramme ausgibt, und
der Steuerabschnitt die Stummschaltung des Audiosignals und das Löschen der Stummschaltung in Verbindung mit den Videosignalen steuert.

8. Verfahren zum Steuern der Anzeige eines Fernsehempfängers, mit:
einem Schritt des Anschaltens der Leistungsversorgung eines Empfängers, und
einem Schritt zum Empfangen eines Rundfunkprogramms durch einen Empfangsabschnitt, um es auf einem Anzeigeabschnitt anzuzeigen;
**dadurch gekennzeichnet, dass** es umfasst:
einen ersten Bestimmungsschritt, um zu bestimmen, ob eine Leistungsversorgungstaste betätigt wird;
einen Schritt des Unterbrechens der Versorgung einer Leistungsversorgungsspannung von einer Betriebsleistungsversorgung zu dem Anzeigeabschnitt, wenn der Befehl, die Leistungsversorgung abzuschalten, durch die Betätigung der Leistungsversorgungstaste bei dem ersten Bestimmungsschritt erzeugt wird;
einen zweiten Bestimmungsschritt, um den internen Zustand des Anzeigeabschnitts zu überwachen und zu bestimmen, ob der interne Zustand eine vorbestimmte Bedingung erfüllt;
einen dritten Bestimmungsschritt, um zu bestimmen, ob die Leistungsversorgungstaste betätigt wird, während die vorbestimmte Bedingung erfüllt ist;
einen Schritt, um die Versorgung der Leistungsversorgungsspannung zu dem Anzeigeabschnitt erneut zu starten, wenn der Befehl, die Leistungsversorgung anzuschalten, durch die Betätigung der Leistungsversorgungstaste bei dem dritten Bestimmungsschritt erzeugt wird; und
einen Schritt, um die Betriebsleistungsversorgung zu steuern, um die Versorgung der Leistungsversorgungsspannung zu dem Empfangsabschnitt ebenfalls abzuschalten, wenn die vorbestimmte Bedingung bei dem zweiten Bestimmungsschritt nicht erfüllt ist.

9. Verfahren zum Steuern der Anzeige eines Fernsehempfängers gemäß Anspruch 8, bei dem die Versorgung der Leistungsversorgungsspannung zu dem Anzeigeabschnitt von der Betriebsleistungsversorgung nach Stummschaltung der von dem Empfangsabschnitt empfangenen Videosignale unterbrochen wird, wenn der erste Befehl, die Leistungsversorgung abzuschalten, durch die Betätigung der Leistungsversorgungstaste bei dem ersten Bestimmungsschritt erzeugt wurde; und
die Versorgung der Leistungsversorgungsspannung zu dem Anzeigeabschnitt nach Löschen der Videostummschaltung erneut gestartet wird, wenn der Befehl, die Leistungsversorgung anzuschalten, durch die Betätigung der Leistungsversorgungstaste bei dem dritten Bestimmungsschritt erzeugt wird.

10. Verfahren zum Steuern der Anzeige eines Fernsehempfängers gemäß Anspruch 8, bei dem die vorbestimmte Bedingung in dem Anzeigeabschnitt basierend auf der zu dem Anzeigeabschnitt gelieferten Leistungsversorgungsspannung eingestellt wird.

11. Verfahren zum Steuern der Anzeige eines Fernsehempfängers gemäß Anspruch 9, bei dem die vorbestimmte Bedingung in dem Anzeigeabschnitt basierend auf der zu dem Anzeigeabschnitt gelieferten Leistungsversorgungsspannung eingestellt wird.

## Revendications

1. Récepteur de télévision possédant :
une section de réception pour recevoir un programme de télédiffusion afin d'obtenir des signaux vidéo ;
une section d'affichage, incluant un panneau d'affichage à cristaux liquides, pour afficher les signaux vidéo ;
une alimentation de fonctionnement pour délivrer sélectivement des tensions d'alimentation à la section de réception et à la section d'affichage, respectivement ; et
une section de génération de commande pour générer une commande vers l'alimentation de fonctionnement afin de mettre hors tension l'alimentation et aussi de mettre sous tension l'alimentation;
**caractérisé en ce qu'**il comprend :
une section de surveillance pour surveiller l'état interne de la section d'affichage afin de générer un résultat de surveillance ; et
une section de contrôle pour interrompre la délivrance des tensions d'alimentation depuis l'alimentation de fonctionnement à la section d'affichage lorsque la section de génération de commande génère la commande de mise hors tension de l'alimentation, démarrer de nouveau la délivrance des tensions d'alimentation à la section d'affichage lorsque la section de génération de commande génère la commande de mise sous tension de l'alimentation de fonctionnement pendant que la section de surveillance surveille l'état interne de la section d'affichage après l'interruption de l'alimentation de fonctionnement et l'état interne satisfait une condition prédéterminée, et contrôler l'alimentation de fonctionnement afin de bloquer aussi les tensions d'alimentation vers la section de réception si l'état interne de la section d'affichage ne satisfait pas la condition prédéterminée.

2. Récepteur de télévision selon la revendication 1, dans lequel la section de contrôle interrompt la délivrance des tensions d'alimentation à la section d'affichage depuis l'alimentation de fonctionnement après avoir coupé les signaux vidéo reçus par la section de réception lorsque la section de génération de commande génère la commande de mise hors tension de l'alimentation, et démarre de nouveau la délivrance des tensions d'alimentation à la section d'affichage après avoir annulé la coupure vidéo lorsque la section de génération de commande génère la commande de mise hors tension de l'alimentation de fonctionnement.

3. Récepteur de télévision selon la revendication 1, dans lequel la section d'affichage inclut un circuit inverseur et un rétroéclairage afin d'émettre de la lumière en utilisant une sortie du circuit inverseur en tant qu'alimentation, et
la condition prédéterminée de l'état interne de la section d'affichage est établie en se basant sur une tension d'alimentation délivrée au circuit inverseur.

4. Récepteur de télévision selon la revendication 2, dans lequel la section d'affichage inclut un circuit inverseur et un rétroéclairage afin d'émettre de la lumière en utilisant une sortie du circuit inverseur en tant qu'alimentation, et
la condition prédéterminée de l'état interne de la section d'affichage est établie en se basant sur une tension d'alimentation délivrée au circuit inverseur.

5. Récepteur de télévision selon la revendication 1, dans lequel le panneau d'affichage à cristaux liquides inclut un corps de panneau d'affichage à cristaux liquides, un circuit inverseur, un rétroéclairage qui émet de la lumière pour un affichage sur le corps de panneau d'affichage à cristaux liquides en utilisant une sortie du circuit inverseur en tant qu'alimentation, et un circuit de contrôle qui commande le corps de panneau d'affichage à cristaux liquides sur la base des signaux vidéo provenant de la section de réception et contrôle l'opération du rétroéclairage ;
l'alimentation de fonctionnement délivre sélectivement des tensions d'alimentation à la section de réception et au panneau d'affichage à cristaux liquides, respectivement ; et
la section de contrôle contrôle l'alimentation de fonctionnement afin d'interrompre la délivrance des tensions d'alimentation au panneau d'affichage à cristaux liquides lorsque la section de génération de commande génère la commande de mise hors tension de l'alimentation, démarre de nouveau la délivrance des tensions d'alimentation au panneau d'affichage à cristaux liquides lorsqu'une valeur de la tension délivrée au circuit inverseur en tant que tension d'alimentation est surveillée par la section de surveillance et la section de génération de commande génère la commande de mise sous tension de l'alimentation de fonctionnement avant que la valeur devienne égale ou inférieure à une valeur prédéterminée, et coupe aussi la délivrance de la tension d'alimentation à la section de réception si la valeur de la tension d'alimentation du circuit inverseur devient inférieure à la valeur prédéterminée.

6. Récepteur de télévision selon la revendication 5, dans lequel la section de contrôle coupe les signaux vidéo reçus par la section de réception lorsque la section de génération de commande génère la commande de mise hors tension de l'alimentation, met hors tension le rétroéclairage et interrompt la délivrance des tensions d'alimentation au panneau d'affichage à cristaux liquides, et annule la coupure vidéo lorsque la section de génération de commande génère la commande de mise sous tension de l'alimentation de fonctionnement, allume le rétroéclairage et démarre de nouveau la délivrance des tensions d'alimentation au panneau d'affichage à cristaux liquides.

7. Récepteur de télévision selon la revendication 6, dans lequel la section de réception sort aussi un signal audio du programme de télédiffusion reçu, et
la section de contrôle contrôle la sourdine du signal audio et l'annulation de la sourdine en association avec les signaux vidéo.

8. Procédé de contrôle de l'affichage d'un récepteur de télévision, possédant :
une étape de mise sous tension d'une alimentation d'un récepteur ; et
une étape de réception d'un programme de télédiffusion par une section de réception afin de l'afficher sur une section d'affichage,
**caractérisé en ce qu'**il comprend :
une première étape de détermination afin de déterminer si une touche marche/arrêt est actionnée ;
une étape d'interruption de la délivrance d'une tension d'alimentation depuis une alimentation de fonctionnement à la section d'affichage lorsque la commande de mise hors tension de l'alimentation est générée par l'opération de la touche marche/arrêt à la première étape de détermination ;
une deuxième étape de détermination afin de surveiller l'état interne de la section d'affichage et de déterminer si l'état interne satisfait une condition prédéterminée ;
une troisième étape de détermination afin de déterminer si la touche marche/arrêt est actionnée pendant que la condition prédéterminée est satisfaite ;
une étape pour démarrer de nouveau la délivrance de la tension d'alimentation à la section d'affichage lorsque la commande de mise sous tension de l'alimentation est générée par l'opération de la touche marche/arrêt à la troisième étape de détermination ; et
une étape pour contrôler l'alimentation de fonctionnement afin de couper aussi la délivrance de la tension d'alimentation à la section de réception si la condition prédéterminée n'est pas satisfaite à la deuxième étape de détermination.

9. Procédé de contrôle de l'affichage d'un récepteur de télévision selon la revendication 8, dans lequel la délivrance de la tension d'alimentation à la section d'affichage depuis l'alimentation de fonctionnement est interrompue après avoir coupé les signaux vidéo reçus par la section de réception lorsque la première commande de mise hors tension de l'alimentation est générée par l'opération de la touche marche/arrêt à la première étape de détermination ; et
la délivrance de la tension d'alimentation à la section d'affichage est démarrée de nouveau après avoir annulé la coupure vidéo lorsque la commande de mise sous tension de l'alimentation est générée par l'opération de la touche marche/arrêt à la troisième étape de détermination.

10. Procédé de contrôle de l'affichage d'un récepteur de télévision selon la revendication 8, dans lequel la condition prédéterminée dans la section d'affichage est établie en se basant sur la tension d'alimentation délivrée à la section d'affichage.

11. Procédé de contrôle de l'affichage d'un récepteur de télévision selon la revendication 9, dans lequel la condition prédéterminée dans la section d'affichage est établie en se basant sur la tension d'alimentation délivrée à la section d'affichage.
